# EUROPEAN PATENT APPLICATION

(11) **EP 4 708 927 A1**
(43) Date of publication of application: **11.03.2026**
(21) Application number: 24814415.6
(22) Date of filing: 28.05.2024
(51) Int. Cl.: H04W 4/20

(54) **TRANSMISSION METHOD AND APPARATUS, AND TERMINAL**

(30) Priority: 31.05.2023 CN 202310645715
(71) Applicant: Huawei Technologies Co., Ltd., Shenzhen, Guangdong 518129 (CN)
(72) Inventor: QUAN, Chao, Shenzhen, Guangdong 518129 (CN); WANG, Yali, Shenzhen, Guangdong 518129 (CN)
(74) Representative: Huawei European IPR
(86) International application number: PCT/CN2024/095690
(87) International publication number: WO 2024/245218

(57) **Abstract**

This application provides a transmission method and apparatus, and a terminal, and the method may be applied to the communication field. The method includes: A media player receives first indication information and second indication information that are sent by a media controller, where the first indication information indicates control signaling, the second indication information indicates an signaling scope of the control signaling, and the signaling scope indicates that the control signaling acts on the media player; or the signaling scope indicates that the control signaling acts on devices in a device set, and the device set includes the media player; and the media player performs a corresponding operation based on the first indication information and the second indication information. Embodiments of this application may be applied to a smart home scenario or an in-vehicle scenario, to help prevent a user from performing complex operations when the user controls an audio device and a video device, and help improve user experience.

## Description

This application claims priority to Chinese Patent Application No. 202310645715.1, filed with the China National Intellectual Property Administration on May 31, 2023 and entitled "TRANSMISSION METHOD AND APPARATUS, AND TERMINAL", which is incorporated herein by reference in its entirety.

### TECHNICAL FIELD

Embodiments of this application relate to the communication field, and more specifically, to a transmission method and apparatus, and a terminal.

### BACKGROUND

In the short-range communication field, currently, Bluetooth (Bluetooth) and wireless fidelity (wireless fidelity, Wi-Fi) technologies are mainly used. Bluetooth is mainly used for audio applications, and Wi-Fi is mainly used for video applications. When a user is in an audio-visual separation scene, both the two protocols need to be used. Although audio data and video data are logically associated, control operations still need to be performed in respective ranges of the two protocols. Consequently, the user needs to control an audio device and a video device through complex operations, which affects user experience.

### SUMMARY

This application provides a transmission method and apparatus, and a terminal, to help prevent a user from performing complex operations when the user controls an audio device and a video device, and help improve user experience.

According to a first aspect, a transmission method is provided. The method includes: receiving first indication information and second indication information, where the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set includes the first device; and performing a first operation based on the first indication information and the second indication information.

Based on the foregoing technical solution, the signaling scope of the control signaling indicates whether the control signaling acts on a point-to-point scope or a device set scope, to help improve flexibility of controlling an audio device and a video device. In addition, when the control signaling acts on the device set scope, coordinated control can be implemented on devices in the device set, to prevent a user from performing complex operations when the user controls the audio device and the video device, and help improve user experience.

The first signaling scope indicating that the first control signaling acts on the first device may also be understood as that the first signaling scope is a point-to-point scope.

The first signaling scope indicating that the first control signaling acts on the devices in the first device set may also be understood as that the first signaling scope is a device set scope.

In some possible implementations, the first indication information may be carried in the first control signaling, and the second indication information may be carried in other control signaling.

With reference to the first aspect, in some implementations of the first aspect, the receiving the first indication information and the second indication information includes: receiving the first control signaling, where the first control signaling indicates the first signaling scope.

Based on the foregoing technical solution, the first control signaling may implicitly indicate the signaling scope of the first control signaling. A device that receives the first control signaling can clearly know the signaling scope of the first control signaling, to implement control in the point-to-point scope or coordinated control in the device set scope, and help improve control flexibility. In addition, when the first control signaling acts on the device set scope, coordinated control can be implemented on the devices in the device set, to prevent the user from performing complex operations when the user controls the audio device and the video device, and help improve user experience.

With reference to the first aspect, in some implementations of the first aspect, the first control signaling is media play control signaling.

In some possible implementations, the media play control signaling includes first-type media play control signaling and second-type media play control signaling, and the second-type media play control signaling may be newly designed media play control signaling. The first-type media play control signaling may implicitly indicate that an signaling scope of the first-type media play control signaling is a point-to-point scope, and the second-type media play control signaling may implicitly indicate that an signaling scope of the second-type media play control signaling is a device set scope.

Based on the foregoing technical solution, different media play control signaling may implicitly indicate signaling scopes corresponding to the media play control signaling, and no new field needs to be added to the media play control signaling to indicate the signaling scope of the media play control signaling, to help reduce signaling overheads.

With reference to the first aspect, in some implementations of the first aspect, the method further includes: receiving third indication information, where the third indication information indicates a type of data controlled by the first control signaling, and the type of the data includes audio data and/or video data; and the performing the first operation based on the first indication information and the second indication information includes: performing the first operation based on the first indication information, the second indication information, and the third indication information.

Based on the foregoing technical solution, the third indication information is transmitted, so that a device that receives the third indication information can clearly know which devices in the first device set corresponding control signaling needs to be forwarded to. This helps improve control accuracy of the audio data and the video data, and helps improve user experience.

With reference to the first aspect, in some implementations of the first aspect, the receiving the first indication information and the second indication information includes: receiving the first control signaling, where the first control signaling includes a first field, and the first field indicates the first signaling scope.

Based on the foregoing technical solution, a field may be added to the first control signaling to indicate the signaling scope of the first control signaling, so that the device that receives the first control signaling can clearly know that the first control signaling acts on a point-to-point scope or a device set scope. This helps improve flexibility of controlling the audio device and the video device. In addition, when the first control signaling acts on the device set scope, the user does not need to perform complex operations when the user controls the audio device and the video device, and user experience is improved.

With reference to the first aspect, in some implementations of the first aspect, the first control signaling is volume control signaling.

With reference to the first aspect, in some implementations of the first aspect, the first signaling scope indicates that the first control signaling acts on the devices in the first device set, and the receiving the first indication information and the second indication information includes: receiving the first indication information and the second indication information from a second device; and the performing the first operation based on the first indication information and the second indication information includes: sending fourth indication information and fifth indication information to a third device based on the first indication information and the second indication information, where the fourth indication information indicates second control signaling, and the fifth indication information indicates a second signaling scope, where the second control signaling is associated with the first control signaling, and the second signaling scope is associated with the first signaling scope.

Based on the foregoing technical solution, when the signaling scope of the first control signaling is the device set scope, the fourth indication information and the fifth indication information may be sent to the third device in the device set based on the first indication information and the second indication information. Therefore, coordinated control can be implemented on devices in the device set, to prevent the user from performing complex operations when the user controls the audio device and the video device, and help improve user experience.

In some possible implementations, that the second control signaling is associated with the first control signaling may include: The second control signaling has same semantics as the first control signaling.

In some possible implementations, signaling types of the second control signaling and the first control signaling are different. For example, the second device and the third device may be media play controllers, and the first device may be a media play server. The signaling type of the first control signaling sent by the second device to the first device may be a media play control request, and the type of the second control signaling sent by the first device to the third device may be a notification or an indication of a media play service attribute.

In some possible implementations, that the second signaling scope is associated with the first signaling scope includes: The second signaling scope is the same as the first signaling scope. For example, the second signaling scope indicates that the second control signaling acts on the devices in the first device set.

In some possible implementations, the method further includes: sending, to the third device, indication information indicating a type of data controlled by the second control signaling.

For example, the type of the data carried in the first control signaling sent by the second device to the first device includes audio data and video data. The type of the data carried in the second control signaling sent by the first device to the third device includes audio data and video data.

With reference to the first aspect, in some implementations of the first aspect, the first signaling scope indicates that the first control signaling acts on the devices in the first device set, and the receiving the first indication information and the second indication information includes: receiving the first indication information and the second indication information from a fourth device; and the method further includes: obtaining an input of the user; and sending sixth indication information and seventh indication information to the fourth device based on the input, where the sixth indication information indicates third control signaling, and the seventh indication information indicates a third signaling scope, where the third control signaling is associated with the first control signaling, and the third signaling scope is associated with the first signaling scope.

Based on the foregoing technical solution, for example, the first control signaling is stop signaling. When obtaining an input of the user for determining to resume playing, the first device may send play signaling to the fourth device, where an signaling scope of the play signaling is a device set scope. After receiving the play signaling, the fourth device may resume playing of all devices in the device set, to implement coordinated control on the entire device set, prevent the user from performing complex operations when the user controls the audio device and the video device, and help improve user experience.

In some possible implementations, the first device may be a sound box, a headset, or the like, and the fourth device may be a mobile phone, a large-screen device, or the like.

According to a second aspect, a transmission method is provided. The method includes: sending first indication information and second indication information, where the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set includes the first device.

With reference to the second aspect, in some implementations of the second aspect, the sending the first indication information and the second indication information includes: sending the first control signaling, where the first control signaling indicates the first signaling scope.

With reference to the second aspect, in some implementations of the second aspect, the first control signaling is media play control signaling.

With reference to the second aspect, in some implementations of the second aspect, the method further includes: sending third indication information, where the third indication information indicates a type of data controlled by the first control signaling, and the type of the data includes audio data and/or video data.

With reference to the second aspect, in some implementations of the second aspect, the sending the first indication information and the second indication information includes: sending the first control signaling, where the first control signaling includes a first field, and the first field indicates the first signaling scope.

With reference to the second aspect, in some implementations of the second aspect, the first control signaling is volume control signaling.

With reference to the second aspect, in some implementations of the second aspect, the sending the first indication information and the second indication information includes: sending the first indication information and the second indication information to a fourth device; and the method further includes: receiving sixth indication information and seventh indication information from the fourth device, where the sixth indication information indicates third control signaling, and the seventh indication information indicates a third signaling scope, where the third control signaling is associated with the first control signaling, and the third signaling scope is associated with the first signaling scope.

According to a third aspect, this application provides a transmission apparatus. The apparatus includes: a receiving unit, configured to receive first indication information and second indication information, where the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set includes the first device; and a processing unit, configured to perform a first operation based on the first indication information and the second indication information.

With reference to the third aspect, in some implementations of the third aspect, the receiving unit is configured to receive the first control signaling, and the first control signaling indicates the first signaling scope.

With reference to the third aspect, in some implementations of the third aspect, the first control signaling is media play control signaling.

With reference to the third aspect, in some implementations of the third aspect, the receiving unit is further configured to receive third indication information, where the third indication information indicates a type of data controlled by the first control signaling, and the type of the data includes audio data and/or video data. The processing unit is configured to perform the first operation based on the first indication information, the second indication information, and the third indication information.

With reference to the third aspect, in some implementations of the third aspect, the receiving unit is further configured to receive the first control signaling, where the first control signaling includes a first field, and the first field indicates the first signaling scope.

With reference to the third aspect, in some implementations of the third aspect, the first control signaling is volume control signaling.

With reference to the third aspect, in some implementations of the third aspect, the apparatus further includes a sending unit, and the first signaling scope indicates that the first control signaling acts on the devices in the first device set. The receiving unit is configured to receive the first indication information and the second indication information from a second device. The sending unit is configured to send fourth indication information and fifth indication information to a third device based on the first indication information and the second indication information, where the fourth indication information indicates second control signaling, and the fifth indication information indicates a second signaling scope. The second control signaling is associated with the first control signaling, and the second signaling scope is associated with the first signaling scope.

With reference to the third aspect, in some implementations of the third aspect, the apparatus further includes an obtaining unit and a sending unit, and the first signaling scope indicates that the first control signaling acts on the devices in the first device set. The receiving unit is configured to receive the first indication information and the second indication information from a fourth device. The obtaining unit is configured to obtain an input of a user. The sending unit is configured to send sixth indication information and seventh indication information to the fourth device based on the input, where the sixth indication information indicates third control signaling, and the seventh indication information indicates a third signaling scope. The third control signaling is associated with the first control signaling, and the third signaling scope is associated with the first signaling scope.

According to a fourth aspect, this application provides a transmission apparatus. The apparatus includes: a processing unit, configured to determine first indication information and second indication information, where the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set includes the first device; and a sending unit, configured to send the first indication information and the second indication information.

With reference to the fourth aspect, in some implementations of the fourth aspect, the sending unit is configured to send the first control signaling, and the first control signaling indicates the first signaling scope.

With reference to the fourth aspect, in some implementations of the fourth aspect, the first control signaling is media play control signaling.

With reference to the fourth aspect, in some implementations of the fourth aspect, the sending unit is further configured to send third indication information, where the third indication information indicates a type of data controlled by the first control signaling, and the type of the data includes audio data and/or video data.

With reference to the fourth aspect, in some implementations of the fourth aspect, the sending unit is configured to send the first control signaling, where the first control signaling includes a first field, and the first field indicates the first signaling scope.

With reference to the fourth aspect, in some implementations of the fourth aspect, the first control signaling is volume control signaling.

With reference to the fourth aspect, in some implementations of the fourth aspect, the apparatus further includes a receiving unit. The sending unit is configured to send the first indication information and the second indication information to a fourth device. The receiving unit is configured to receive sixth indication information and seventh indication information from the fourth device, where the sixth indication information indicates third control signaling, and the seventh indication information indicates a third signaling scope. The third control signaling is associated with the first control signaling, and the third signaling scope is associated with the first signaling scope.

According to a fifth aspect, this application provides a transmission apparatus. The apparatus includes: a memory, configured to store computer instructions; and a processor, configured to execute the computer instructions stored in the memory, to enable the apparatus to perform the method in the first aspect.

According to a sixth aspect, this application provides a transmission apparatus. The apparatus includes: a memory, configured to store computer instructions; and a processor, configured to execute the computer instructions stored in the memory, to enable the apparatus to perform the method in the second aspect.

According to a seventh aspect, this application provides a system. The system may include the transmission apparatuses in the third aspect and the fourth aspect, or the system may include the transmission apparatuses in the fifth aspect and the sixth aspect.

According to an eighth aspect, this application provides a terminal. The terminal includes the transmission apparatuses in the third aspect, the fourth aspect, the fifth aspect, and the sixth aspect, or the terminal includes the system in the seventh aspect.

According to a ninth aspect, this application provides a computer program product. The computer program product includes computer program code. When the computer program code is run on a computer, the computer is enabled to perform the method in the first aspect or the second aspect.

The computer program code may be completely or partially stored in a first storage medium. The first storage medium may be encapsulated with a processor, or encapsulated separately from a processor. This is not specifically limited in embodiments of this application.

According to a tenth aspect, this application provides a computer-readable medium. The computer-readable medium stores program code. When the computer program code is run on a computer, the computer is enabled to perform the method in the first aspect or the second aspect.

According to an eleventh aspect, an embodiment of this application provides a chip system. The chip system includes a processor, configured to invoke a computer program or computer instructions stored in a memory, to enable the processor to perform the method in the first aspect or the second aspect.

With reference to the eleventh aspect, in a possible implementation, the processor is coupled to the memory through an interface.

With reference to the eleventh aspect, in a possible implementation, the chip system further includes the memory. The memory stores the computer program or the computer instructions.

In this application, based on the implementations provided in the foregoing aspects, the implementations may be further combined to provide more implementations.

### BRIEF DESCRIPTION OF DRAWINGS

FIG. 1 is a diagram of an application scenario according to an embodiment of this application;
FIG. 2 is another diagram of an application scenario according to an embodiment of this application;
FIG. 3 is another diagram of an application scenario according to an embodiment of this application;
FIG. 4 is a schematic flowchart of a transmission method according to an embodiment of this application;
FIG. 5 is another schematic flowchart of a transmission method according to an embodiment of this application;
FIG. 6 is another schematic flowchart of a transmission method according to an embodiment of this application;
FIG. 7A and FIG. 7B are another schematic flowchart of a transmission method according to an embodiment of this application;
FIG. 8 is another diagram of an application scenario according to an embodiment of this application;
FIG. 9A and FIG. 9B are another schematic flowchart of a transmission method according to an embodiment of this application;
FIG. 10 is another schematic flowchart of a transmission method according to an embodiment of this application;
FIG. 11 is another diagram of an application scenario according to an embodiment of this application;
FIG. 12 is a block diagram of a transmission apparatus according to an embodiment of this application; and
FIG. 13 is another block diagram of a transmission apparatus according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

Prefix words "first", "second", and the like in embodiments of this application are merely intended to distinguish between different objects, and impose no limitation on locations, sequences, priorities, quantities, content, or the like of the described objects. Use of prefixes such as ordinal numbers used to distinguish the described objects in embodiments of this application does not constitute a limitation on the described objects. For descriptions of the described objects, refer to the context description in claims or embodiments, and the use of such prefix words should not constitute a redundant limitation. In addition, in the descriptions of embodiments, unless otherwise specified, "a plurality of" means two or more.

A terminal in embodiments of this application is also referred to as user equipment (user equipment, UE), a mobile station (mobile station, MS), a mobile terminal (mobile terminal, MT), or the like, for example, a handheld device, an in-vehicle device, or a vehicle that has a wireless connection function. Examples of some terminals are a mobile phone (mobile phone), a tablet computer, a laptop, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

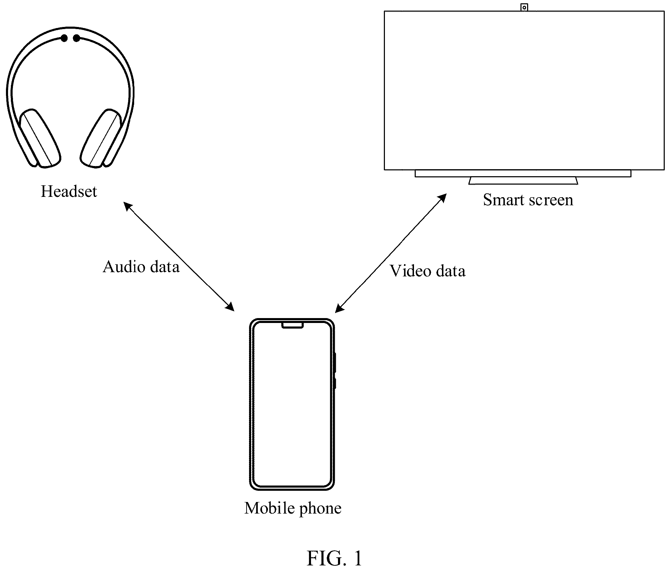

FIG. 1 is a diagram of an application scenario according to an embodiment of this application. A mobile phone sets up a connection to a headset through Bluetooth and sets up a connection to a smart screen through Wi-Fi. The mobile phone may send audio data to the headset, and the headset plays the audio data. The mobile phone may send video data to the smart screen, and the smart screen plays the video data. This implements audio-visual separation. Because standard systems of the Bluetooth protocol and the Wi-Fi protocol are different, interconnection cannot be implemented between control planes of the two protocols. Consequently, when volume is adjusted on the smart screen, corresponding volume adjustment at the headset end cannot be controlled.

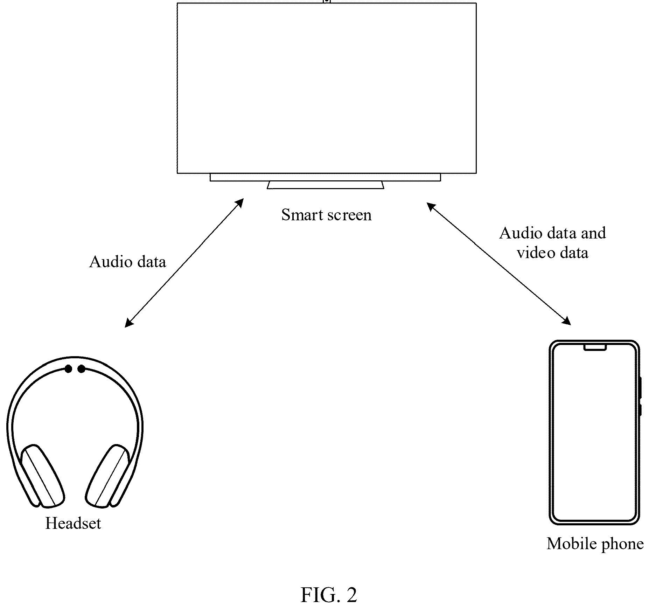

FIG. 2 is another diagram of an application scenario according to an embodiment of this application. A mobile phone sets up a connection to a smart screen through Wi-Fi, and the smart screen sets up a connection to a headset through Bluetooth. The mobile phone may send audio data and video data to the smart screen, and the smart screen may send the audio data to the headset, so that the headset can play the audio data, and the smart screen can play the video data. In this way, audio-visual separation is implemented. The scenario shown in FIG. 2 is similar to the scenario shown in FIG. 1. When receiving a play or pause instruction from a user, the headset cannot control the mobile phone.

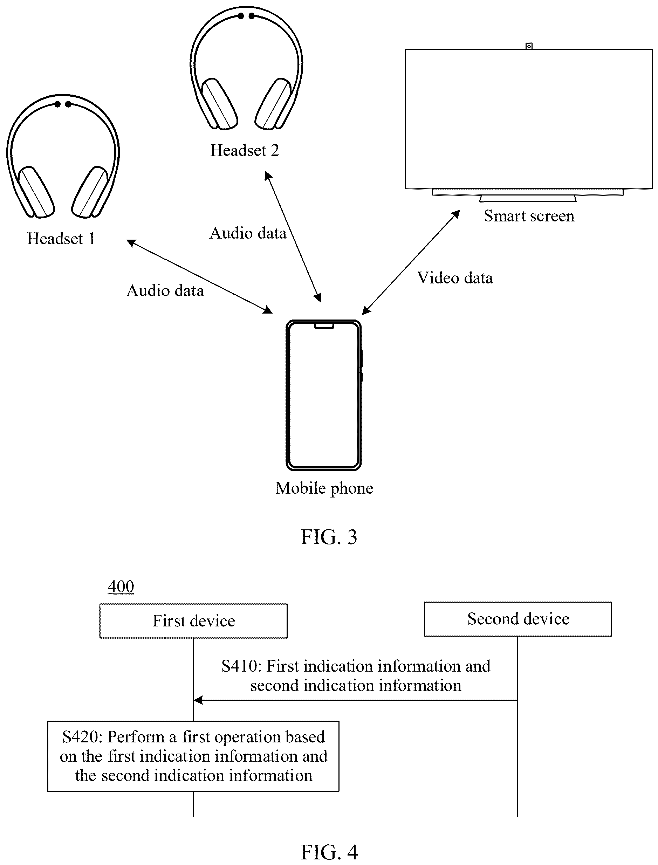

FIG. 3 is another diagram of an application scenario according to an embodiment of this application. A mobile phone sets up connections to a headset 1 and a headset 2 through Bluetooth and sets up a connection to a smart screen through Wi-Fi. The mobile phone may send audio data to the headset 1 and the headset 2, and the headset 1 and the headset 2 play the audio data. The mobile phone may send video data to the smart screen, and the smart screen plays the video data. In this way, audio-visual separation is implemented. When receiving a play or pause instruction from a user, the headset 1 cannot synchronize the instruction to the headset 2.

In the scenarios shown in FIG. 1 to FIG. 3, because the Bluetooth and the Wi-Fi have respective systems in media control, interconnection cannot be implemented currently, and it is difficult to implement translation and coordination. In addition, these media control protocols are mainly used for point-to-point scenarios, and have poor extensibility.

In view of this, embodiments of this application provide a transmission method and apparatus, and a terminal. An signaling scope of control signaling indicates whether the control signaling acts on a point-to-point scope or a device set scope, to help improve flexibility of controlling an audio device and a video device. In addition, when the control signaling acts on the device set scope, coordinated control can be implemented on devices in a device set, to prevent a user from performing complex operations when the user controls the audio device and the video device, and help improve user experience.

Before the technical solutions of this application are described, related terms in embodiments of this application are first described.
(1) A cooperation device set may also be referred to as a device set, and is a group of related devices that cooperatively provide a specific service.
(2) A cooperation device set user is a device that uses a service supported by the cooperation device set.
(3) A cooperation device set member is a device that provides a service supported by the cooperation device set.
   The application scenario shown in FIG. 1 is used as an example. The mobile phone, the headset, and the smart screen form a cooperation device set. The mobile phone may be a cooperation device set user, and the headset and the smart screen may be cooperation device set members.
(4) A media player is a server that carries a media play control service in media play control.
(5) A media controller is a client that accesses a media play control service in media play control.

The application scenario shown in FIG. 1 is used as an example. The headset may send control signaling (for example, stop/play) to the mobile phone. In this case, the headset may serve as a media controller, and the mobile phone may serve as a media player. Correspondingly, the mobile phone may also send control signaling to the smart screen. In this case, the mobile phone may serve as a media controller, and the smart screen may serve as a media player. In this scenario, the mobile phone may serve as both a media player and a media controller.

The application scenario shown in FIG. 2 is used as an example. The headset may send media play control signaling (for example, stop/play) to the smart screen. In this case, the headset may serve as a media controller, the smart screen may serve as a media player, and the mobile phone may serve as a media controller.

(6) An audio player is a server that carries a volume control service in volume control.

(7) An audio controller is a client that accesses a volume control service in volume control.

The application scenario shown in FIG. 3 is used as an example. The headset 1 and the headset 2 may serve as audio controllers, and the mobile phone may serve as an audio player. The application scenario shown in FIG. 1 is used as an example. Volume control signaling may be transmitted between the headset and the mobile phone. In this case, the headset may serve as an audio controller, and the mobile phone may serve as an audio player.

The foregoing merely uses the media player, the media controller, the audio player, and the audio controller as examples for description. The names are not specifically limited in embodiments of this application. For example, the media controller may also be referred to as a media play controller.

A media play control function in embodiments of this application may be implemented through interaction between the media controller and the media player. The media play control service is used to provide a player-like control interface for the media controller, so that the media controller can obtain the media player, basic media information, and provide a media play control interface. In addition, the media controller may also receive a status change of the media player, to synchronize a play status. A plurality of media players may be installed on one Sparklink device, and each media player may correspond to one media play control service instance. Each media stream is associated with a media play control service instance, and control of the media play control instance affects a transmission status of the corresponding media stream.

A volume control function in embodiments of this application may be implemented through interaction between the audio controller and the audio player. The volume control service is used to provide a volume control interface for the audio controller, and synchronize information of the audio player.

In embodiments of this application, the media play control function and the volume control function may act on a point-to-point scope (for example, media controller-media player or audio controller-audio player) or a cooperation device set scope.

For the point-to-point scope, the media play control signaling affects a media play status between two devices, and the volume control signaling affects volume setting of an audio output device.

For the cooperation device set scope, the media playing control signaling may further affect a media play status between other devices in the cooperation device set scope. The volume control signaling may further affect volume setting of another audio output device in the cooperation device set.

The cooperative device set user and the cooperative device set member are used as an example. A procedure that can be performed by the devices includes but is not limited to the following:
(1) An audio device and a video device form a cooperation device set. A set service identifier of the cooperation device set is configured to be a universally unique identifier (universally unique identifier, UUID) that can express an application scenario of the audio and video combination, or the set service identifier is configured to be a combination of an independent audio UUID and an independent video UUID.
(2) The cooperation device set user discovers cooperation device set members that meet service requirements, and sets up connections to the cooperation device set members.
(3) The cooperation device set user interacts (for example, performs one or more of a configuration and management procedure of an audio/video transmission channel, and service discovery and access such as a media play control service, an audio/video published capability service, and an audio/video management service) with the cooperation device set members according to requirements of an audio/video application specification indicated by the set service identifier.
(4) The cooperation device set member sends media play control signaling that acts on the cooperation device set scope, where the media play control signaling may carry a type of data (for example, audio data and/or video data). The media play control signaling is used to change a play status of data with a specified media type in the cooperation device set. The type of the data may be selected based on the set service identifier of the cooperation device set.

Optionally, the media play control signaling may further include a cooperation device set identifier, and the cooperation device set identifier may uniquely identify the cooperation device set. For example, the cooperation device set identifier may be a bit sequence generated based on a random number, a hash algorithm, and a cooperation device set key.

Alternatively, the cooperation device set member sends volume control signaling that acts on the cooperation device set scope, where the volume control signaling may be used to change a volume status of the audio output device in the cooperation device set scope. The cooperation device set user forwards the volume control signaling to the corresponding cooperation device set member based on the signaling scope.

Optionally, the volume control signaling may further include the cooperation device set identifier.

(5) The cooperation device set user may send the media play control signaling to another cooperation device set member in the cooperation device set based on semantics, an signaling scope, and a type of data of the media play control signaling.

Alternatively, the cooperation device set user sends the volume control signaling to the corresponding cooperation device set member based on semantics and the signaling scope of the volume control signaling.

For example, Table 1 shows a correspondence between semantics of media play control signaling, a media control role, and a signaling type of the media play control signaling, and the media play control signaling.

**Table 1**

| Media control semantics | Media control role | Signaling type | Media play control signaling |
|---|---|---|---|
| Play/Pause/Stop/Fast forward/Rewind | Media controller | Media play control request | Second-type play request/Second-type stop request/Pause/Fast forward/Rewind |
| | Media player | Notification or indication of a media play service attribute | Second-type play status and media play location |
| Movement of a media location Relative movement of a media location | Media controller | Media play control request | Movement of a media location/Relative movement of a media location |
| | Media player | Notification or indication of a media play service attribute | Media play location |
| Previous media segment | Media controller | Media play control request | Previous media |
| Next media segment Jumping of a media segment | | | Next media Jumping of a media segment |
| | Media player | Notification or indication of a media play service attribute | Media segment information |
| Previous media Next media Media jumping | Media controller | Media play control request | Previous media Next media Media jumping |
| | Media player | Notification or indication of a media play service attribute | Basic media information, media extension information, and media identifier information |
| Changing of a play order | Media controller | Media play control request | Changing of a play order |
| | Media player | Notification or indication of a media play service attribute | Play order |
| Changing of a play speed | Media controller | Media play control request | Changing of a play speed |
| | Media player | Notification or indication of a media play service attribute | Play speed |
| Changing of a seek speed | Media controller | Media play control request | Changing of a seek speed |
| | Media player | Notification or indication of a media play service attribute | Seek speed |

Signaling sent by the media controller to the media player may be referred to as a second-type media play control request (for example, the second-type play request or the second-type stop request), or the signaling may be referred to as a second-type control request. The second-type media play control request is used as an example. The second-type media play control request may implicitly indicate that an signaling scope of the second-type media play control request is devices in a device set, or the second-type media play control request includes a field indicating that the signaling scope of the second-type media play control request is the devices in the device set.

Alternatively, the signaling sent by the media controller to the media player may be referred to as a first-type media play control request (for example, a first-type play request or a first-type stop request), or the signaling may be referred to as a first-type control request. The first-type media play control request is used as an example. The first-type media play control request may implicitly indicate that an signaling scope of the first-type media play control request is a point-to-point scope, or the first-type media play control request includes a field indicating that the signaling scope of the first-type media play control request is the point-to-point scope.

For example, after sending the second-type play request to the media player, the media controller may receive a response sent by the media player, to send data to the media player based on the response. Alternatively, after sending the second-type play request to the media player, the media controller does not need to receive a response sent by the media player, but directly sends data to the media player.

For example, after sending the second-type play status (that indicates playing) and the media play location to the media controller, the media player may send data to the media controller.

The signaling sent by the media player to the media controller may be the second-type play status and the media play location, or the signaling may be referred to as a notification or an indication of the second-type play status and the media play location. The second-type play status implicitly indicates that an signaling scope of the second-type play status is devices in the device set. The second-type play status includes information that expresses a play status, for example, play, ready, seek, and not ready.

Alternatively, the signaling sent by the media player to the media controller may be a first-type play status and a media play location, or the signaling may be referred to as a notification or an indication of the first-type play status and the media play location. The first-type play status implicitly indicates that an signaling scope of the first-type play status is a point-to-point scope. The first-type play status includes information that expresses a play status, for example, play, ready, seek, and not ready.

The foregoing names of the signaling are merely examples, and are not specifically limited in embodiments of this application.

For example, Table 2 shows a correspondence between semantics of volume control signaling, a volume control role, and a signaling type of the volume control signaling and the volume play control signaling.

**Table 2**

| Volume control semantics | Volume control role | Signaling type | Volume control signaling |
|---|---|---|---|
| Mute/Unmute/First-type volume increase/First-type volume decrease/Second-type volume increase/Second-type volume decrease/Main volume | Audio controller | Volume control request | Mute/Unmute/First-type volume increase/First-type volume decrease/Second-type volume increase/Second-type volume decrease/Main volume control |
| control | Audio player | Notification or indication of a volume control service attribute | Volume status |

Signaling sent by the audio controller to the audio player may be a volume control request, and the volume control request may include a field indicating an signaling scope of the volume control request. For example, the volume control request may be first-type volume increase signaling.

The audio player may send the volume status to the audio controller, and the volume status may include a field indicating an signaling scope of the volume status. Alternatively, the audio player may send the notification or the indication of the volume control service attribute to the audio controller, and the notification or the indication of the volume control service attribute may include a field indicating an signaling scope of the volume control service attribute.

When sending media play control signaling or volume control signaling, the cooperation device set member may set an signaling scope of the media play control signaling or the volume control signaling to be consistent with an signaling scope of control signaling previously received from the cooperation device set user, that is, the signaling has consistent context.

For example, Table 3 shows a correspondence between received signaling and signaling sent by a cooperation device set member to a cooperation device set user.

**Table 3**

| Received signaling | Sent signaling | Description |
|---|---|---|
| First-type media play control signaling | First-type media play control signaling | |
| Second-type media play control signaling | Second-type media play control signaling | |
| Mute | Unmute | Signaling scope parameters are consistent |

For example, in the scenario shown in FIG. 1, the headset may receive a first-type play status (that indicates to stop playing) and a media play location that are sent by the mobile phone, and the first-type play status implicitly indicates that an signaling scope of the first-type play status is a point-to-point scope. When detecting a play instruction of the user, the headset may send a first-type play request to the mobile phone. The first-type play request implicitly indicates that an signaling scope of the first-type play request is a point-to-point scope.

For example, the headset may receive a second-type play status (that indicates to stop playing) and a media play location that are sent by the mobile phone, where the second-type play status implicitly indicates that an signaling scope of the second-type play status is devices in the device set. When detecting a play instruction of the user, the headset may send a second-type play request to the mobile phone. The second-type play request implicitly indicates that an signaling scope of the second-type play request is devices in the device set. The mobile phone may send the second-type play request to the smart screen based on the second-type play request.

When receiving media control signaling that needs to be forwarded, the cooperation device set user may send the media control signaling corresponding to semantics to another set member.

For example, if the cooperation device set user is a media controller, the media controller may send a media play control request corresponding to semantics to the media player. If the cooperation device set user is a media player, the media player needs to send a notification or an indication of a media play service attribute corresponding to semantics to the media controller. The correspondence between the media control semantics and the media control signaling is shown in the foregoing table.

If the cooperation device set user is a combination of a media controller and a media player, the media control semantics may be converted in the device according to the correspondence shown in Table 1 to Table 3.

FIG. 4 is a schematic flowchart of a transmission method 400 according to an embodiment of this application. The method 400 may be performed by a first device and a second device. The first device may be a cooperation device set user, and the second device may be a cooperation device set member; or the first device may be a cooperation device set member, and the second device may be a cooperation device user; or the first device may be a media controller, and the second device may be a media server; or the first device may be a media player, and the second device may be a media controller; or the first device may be an audio controller, and the second device may be an audio player; or the first device may be an audio player, and the second device may be an audio controller. The method 400 includes S410 and S420.

S410: The second device sends first indication information and second indication information to the first device, where the first indication information indicates first control signaling, the second indication information indicates a first signaling scope of the first control signaling, and the first signaling scope indicates that the first control signaling acts on the first device; or the first signaling scope indicates that the first control signaling acts on devices in a first device set, and the first device set includes the first device.

Correspondingly, the first device receives the first indication information and the second indication information from the second device.

Optionally, that the second device sends the first indication information and the second indication information to the first device includes: The second device sends the first control signaling to the first device, where the first control signaling indicates the first signaling scope.

Optionally, the first control signaling is media play control signaling.

The scenario shown in FIG. 1 is used as an example. In a process in which the headset (media controller) plays audio data sent by the mobile phone (which may be used as a media player or a media controller), when detecting an input (for example, tapping a stop button for one time) of a user, the headset may send a second-type stop request to the mobile phone. The second-type stop request implicitly indicates that an signaling scope of the second-type stop request is devices in a device set scope. In this way, the mobile phone may stop sending audio data to the headset based on the second-type stop signaling. The mobile phone may send a second-type stop request to the smart screen (media player) based on the signaling scope of the second-type stop signaling, and stop sending video data to the smart screen. When receiving the second-type stop request, the smart screen may stop playing the video data.

The signaling scope of the second-type play request or the second-type stop request is a device set scope. Correspondingly, an signaling scope of a first-type play request or a first-type stop request is a point-to-point scope. For example, when detecting another input (for example, tapping a stop button for two times) of the user, the headset may send the first-type stop request to the mobile phone. When receiving the first-type stop request, the mobile phone may stop sending audio data to the headset, so that the headset stops playing the audio data. In this case, the mobile phone continues to send the video data to the smart screen, and the smart screen continues to play the video data.

The scenario shown in FIG. 1 is still used as an example. When detecting an input for stopping playing audio data and video data, the mobile phone may send a notification or an indication of a second-type play status and a media play location to the headset, and stop sending the audio data to the headset. The second-type play status indicates to stop playing. The mobile phone may further send a second-type media play control request (for example, a second-type stop request) to the smart screen, and stop sending the video data to the smart screen. The second-type play status and the second-type media play control request may implicitly indicate that an signaling scope of the second-type play status and the second-type media play control request is devices in the device set scope. When receiving the notification or the indication of the second-type play status and the media play location, the headset may stop playing the audio data, and when receiving the second-type media play control request, the smart screen may stop playing the video data.

When detecting an input for resuming playing of audio data and video data, the headset may send a second-type play request to the mobile phone. When receiving the second-type play request, the mobile phone may resume sending of the audio data to the headset, so that the headset can resume playing of the audio data. The mobile phone may further send a second-type play request to the smart screen based on an signaling scope of the second-type play request, and resume sending of the video data to the smart screen. When receiving the second-type play request, the smart screen may resume playing of the video data.

Optionally, that the second device sends the first indication information and the second indication information to the first device includes: The second device sends the first control signaling to the first device, where the first control signaling includes a first field, and the first field indicates the first signaling scope.

Optionally, the first control signaling is volume control signaling.

The scenario shown in FIG. 1 is used as an example. The smart screen may send a notification or an indication of a volume control service to the mobile phone. The notification or the indication of the volume control service may include a first field, and the first field indicates that an signaling scope of the volume control request is devices in a device set scope. The mobile phone may send a notification or an indication of a volume control service to the headset based on the notification or the indication of the volume control service.

For example, when the first field is 0×01, it may indicate that an signaling scope of the notification or the indication of the volume control service is devices in the device set.

For example, if the notification or the indication of the volume control service carries a second field (for example, 0×02), it may indicate that the signaling scope of the notification or the indication of the volume control service is a point-to-point scope.

Optionally, the method 400 further includes: The second device sends third indication information to the first device, where the third indication information indicates a type of data controlled by the first control signaling, and the type of the data includes audio data and/or video data.

Optionally, that the second device sends the third indication information to the first device includes: The second device sends the first control signaling to the first device, where the first control signaling includes a third field, and the third field indicates the type of the data.

Optionally, when the first control signaling is media play control signaling, the first control signaling may carry the third field. When the first control signaling is volume control signaling, the first control signaling may not carry the third field, or the first control signaling may carry the third field, and the third field indicates audio data.

The scenario shown in FIG. 3 is used as an example. The headset 1 may send a second-type stop request to the mobile phone. The second-type stop request may include a field 1, and the field 1 indicates audio data. When receiving the second-type stop request, the mobile phone may determine that an signaling scope of the second-type stop request is devices in a device set scope and a type of data on which the second-type stop request acts is audio data. The mobile phone may send a second-type play status (that indicates to stop playing) and a media play location to the headset 2 based on the second-type stop request. The second-type play status includes the field 1.

Alternatively, the headset 1 may send a second-type stop request to the mobile phone. The second-type stop request may include a field 2, and the field 2 indicates audio data and video data. When receiving the second-type stop request, the mobile phone may determine that an signaling scope of the second-type stop request is devices in a device set scope and a type of data on which the second-type stop request acts is the audio data and the video data. The mobile phone may send a second-type play status (that indicates to stop playing) and a media play location to the headset 2 based on the second-type stop request, and send a second-type stop request to the smart screen. The second-type play status and the second-type stop request includes the field 2.

S420: The first device performs a first operation based on the first indication information and the second indication information.

Optionally, the first signaling scope indicates that the first control signaling acts on the devices in the first device set, and the performing the first operation based on the first indication information and the second indication information includes: The first device sends fourth indication information and fifth indication information to a third device based on the first indication information and the second indication information. The fourth indication information indicates second control signaling, the fifth indication information indicates a second signaling scope, the second control signaling is associated with the first control signaling, and the second signaling scope is associated with the first signaling scope.

Optionally, that the second control signaling is associated with the first control signaling may be understood as that the second control signaling has same semantics as the first control signaling.

The scenario shown in FIG. 1 is used as an example. The mobile phone receives a second-type stop request sent by the headset, and the second-type stop request implicitly indicates that an signaling scope of the second-type stop request is devices in a device set scope. The mobile phone may send a second-type stop request to the smart screen based on semantics and the signaling scope of the second-type stop request. In this case, semantics, signaling types, and signaling scopes of the second-type stop request sent by the headset to the mobile phone and the second-type stop request sent by the mobile phone to the smart screen may be the same.

Optionally, the first signaling scope indicates that the first control signaling acts on the devices in the first device set, and the method 400 further includes: obtaining an input of the user; and sending sixth indication information and seventh indication information to the second device based on the input, where the sixth indication information indicates third control signaling, and the seventh indication information indicates a third signaling scope, where the third control signaling is associated with the first control signaling, and the third signaling scope is associated with the first signaling scope.

The following uses different application scenarios to describe the transmission method provided in embodiments of this application.

The application scenario shown in FIG. 1 is used as an example. The mobile phone may be a cooperation device set user, and the headset and the smart screen may be cooperation device set members. Alternatively, the mobile phone may be a media controller and a media player, the headset may be a media controller, and the smart screen may be a media player.

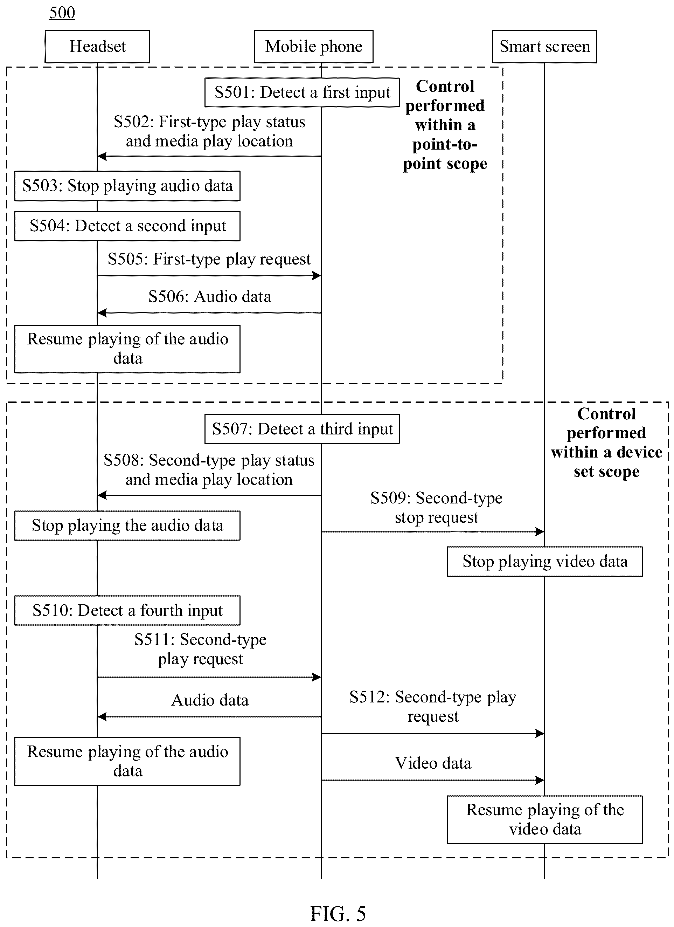

FIG. 5 is a schematic flowchart of a transmission method 500 according to an embodiment of this application. The method 500 includes the following steps.

S501: The mobile phone detects a first input for stopping playing audio data by the headset.

For example, the first input may be a voice input, or the first input is an input of a user for a virtual button or a physical button. For example, a display interface of the mobile phone includes a first virtual button, and the first virtual button is a button for stopping playing audio data by the headset. The first input may be an input for the first virtual button.

S502: The mobile phone sends a first-type play status and a media play location to the headset, where the first-type play status indicates to stop playing.

Optionally, the first-type play status implicitly indicates that an signaling scope of the first-type play status is a point-to-point scope.

Optionally, after sending the first-type play status and the media play location to the headset, the mobile phone may stop sending audio data to the headset.

S503: When receiving the first-type play status and the media play location, the headset may stop playing the audio data.

S504: The mobile phone detects a second input for resuming playing of audio data by the headset.

For example, the second input may be a voice input, or the second input may be an input of the user for a play/pause button.

S505: The headset sends a first-type play request to the mobile phone.

Optionally, the headset may send the first-type play request to the mobile phone based on media control signaling (the first-type play status and the media play location) previously received from the mobile phone, where the first-type play request implicitly indicates that an signaling scope of the first-type play request is a point-to-point scope.

S506: When receiving the first-type play request, the mobile phone may resume sending of the audio data to the headset.

Correspondingly, the headset resumes playing of the audio data.

S501 to S506 are control performed within a point-to-point scope.

S507: The mobile phone detects a third input for stopping playing audio data and video data.

For example, the third input may be a voice input, or the third input is an input of the user for a virtual button or a physical button. For example, the display interface of the mobile phone includes a second virtual button, and the second virtual button is a button for stopping playing audio data by the headset and for stopping playing video data by the smart screen. The third input may be an input for the second virtual button.

S508: The mobile phone sends a second-type play status and a media play location to the headset, where the second-type play status indicates to stop playing.

Optionally, the second-type play status implicitly indicates that an signaling scope of the second-type play status is devices in a device set.

Optionally, the second-type play status includes a field indicating the audio data and the video data.

Optionally, after sending the second-type play status to the headset, the mobile phone may stop sending the audio data to the headset. Correspondingly, the headset stops playing the audio data.

S509: The mobile phone sends a second-type stop request to the smart screen.

Optionally, the second-type stop request implicitly indicates that an signaling scope of the second-type stop request is the devices in the device set scope.

Optionally, the second-type stop request includes a field indicating the audio data and the video data.

Optionally, after sending the second-type stop request to the smart screen, the mobile phone may receive a response sent by the smart screen. After receiving the response, the mobile phone may stop sending the video data to the smart screen. Correspondingly, the smart screen stops playing the video data.

There is no actual sequence between S508 and S509.

S510: The headset detects a fourth input for resuming of playing audio data and video data.

For example, the fourth input may be a voice input, or the fourth input may be an input of the user for a play/pause button.

S511: The headset sends a second-type play request to the mobile phone.

Optionally, the second-type play request implicitly indicates that an signaling scope of the second-type play request is devices in the device set scope.

Optionally, the second-type play request includes a field indicating audio data and video data.

S512: The mobile phone may resume sending of the audio data to the headset based on the second-type play request, and send a second-type play request to the smart screen.

Optionally, the second-type play request implicitly indicates that an signaling scope of the second-type play request is devices in the device set scope.

Optionally, the second-type play request includes the field indicating the audio data and the video data.

Correspondingly, the mobile phone resumes sending of the audio data to the smart screen, and the smart screen resumes playing of the video data.

S507 to S512 are a process of coordinated control performed within the device set scope.

The scenario shown in FIG. 1 is still used as an example. The mobile phone may be a cooperation device set user, and the headset and the smart screen may be cooperation device set members. The mobile phone may be an audio player, the headset may be an audio controller, and the smart screen may be an audio player.

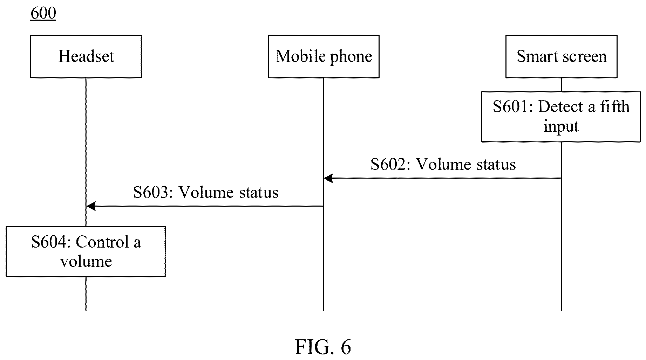

FIG. 6 is a schematic flowchart of a transmission method 600 according to an embodiment of this application. The method 600 includes the following steps.

S601: The smart screen detects a fifth input of a user for adjusting a volume.

For example, the fifth input may be a voice input, or the fifth input may be an input, for adjusting a volume, obtained from a transmitter of a remote control.

S602: The smart screen sends a volume status to the mobile phone.

That the smart screen sends the volume status to the mobile phone may also be understood as that the smart screen sends a notification or an indication of a volume control service attribute to the mobile phone.

Optionally, the volume status includes a field indicating that an signaling scope of the volume status is devices in a device set.

S603: The mobile phone sends a volume status to the headset based on the volume status.

Optionally, semantics of the volume status is the same as that of the volume status in S602, and the volume status includes a field indicating that an signaling scope of the volume status is devices in the device set.

S604: The headset controls a volume of the headset based on the volume status.

The scenario shown in FIG. 2 is used as an example. The smart screen may be a cooperation device set user, and the headset and the mobile phone may be cooperation device set members. Alternatively, the smart screen may be a media player, and the headset and the mobile phone may be media controllers.

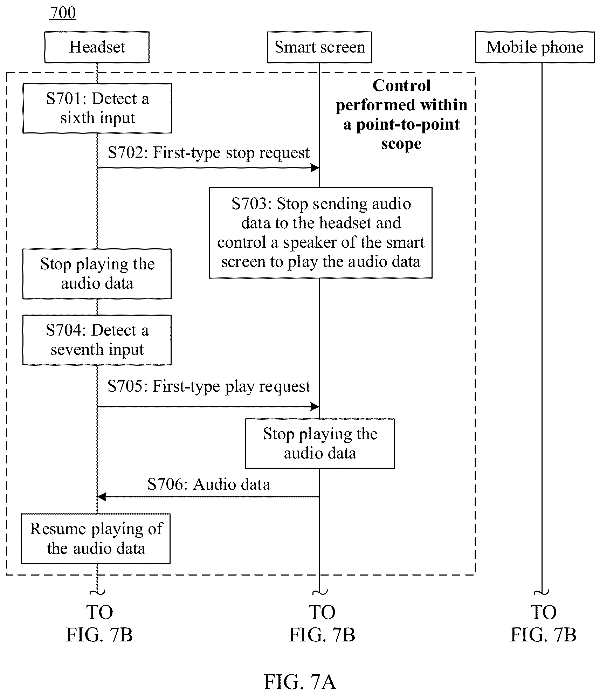

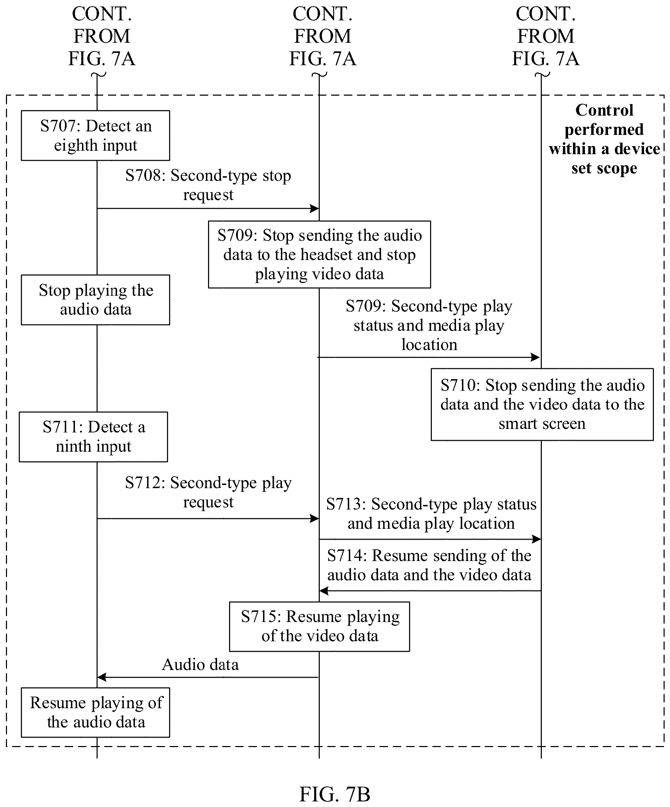

FIG. 7A and FIG. 7B are a schematic flowchart of a transmission method 700 according to an embodiment of this application. The method 700 includes the following steps.

S701: The mobile phone detects a sixth input for stopping playing audio data.

For example, the sixth input may be a voice input, or the sixth input may be an input of a user for a play/pause button that is tapped for two times.

S702: The headset sends a first-type stop request to the smart screen.

Optionally, the first-type stop request implicitly indicates that an signaling scope of the first-type stop request is a point-to-point scope.

S703: The smart screen stops sending audio data to the headset based on the first-type stop request, and controls a speaker of the smart screen to play the audio data.

Correspondingly, the headset stops playing the audio data.

704: The mobile phone detects a seventh input for resuming of playing audio data.

For example, the seventh input may be a voice input, or the seventh input may be an input of the user for a play/pause button that is tapped for two times.

S705: The headset sends a first-type play request to the smart screen.

Optionally, the first-type play request implicitly indicates that an signaling scope of the first-type play request is a point-to-point scope.

S706: The smart screen resumes sending of the audio data to the headset based on the first-type play request, and stops playing the audio data by the speaker of the smart screen.

Correspondingly, the headset may resume playing of the audio data.

S701 to S706 are control performed within a point-to-point scope.

S707: The headset detects an eighth input for stopping playing by all cooperation device set members.

For example, the eighth input may be a voice input, or the eighth input may be an input of the user for a play/pause button that is tapped for one time.

S708: The headset sends a second-type stop request to the smart screen.

Optionally, the second-type stop request implicitly indicates that an signaling scope of the second-type stop request is devices in a device set scope.

Optionally, the second-type stop request includes a field indicating that a type of data is audio data and video data.

S709: The smart screen stops sending the audio data to the headset and stops playing the video data based on the second-type stop request, and sends a second-type play status and a media play location to the mobile phone, where the second-type play status indicates to stop playing.

Optionally, after sending the second-type play status to the headset, the smart screen may stop sending the audio data to the headset.

Correspondingly, the headset stops playing the audio data.

Optionally, the second-type play status implicitly indicates that an signaling scope of the second-type play status is devices in the device set scope.

Optionally, the second-type play status includes a field indicating that a type of data is audio data and video data.

S710: The mobile phone stops sending the audio data and the video data to the smart screen.

S711: The headset detects a ninth input for resuming playing by all cooperation device set members.

For example, the ninth input may be a voice input, or the ninth input may be an input of the user for a play/pause button that is tapped for one time.

S712: The headset sends a second-type play request to the smart screen.

Optionally, the second-type play request implicitly indicates that an signaling scope of the second-type play request is devices in the device set scope.

Optionally, the second-type play request includes a field indicating that a type of data is audio data and video data.

S713: The smart screen sends a second-type play status and a media play location to the mobile phone based on the second-type play request, where the second-type play status indicates playing.

Optionally, the second-type play status implicitly indicates that an signaling scope of the second-type play status is devices in the device set scope.

Optionally, the second-type play status includes a field indicating that a type of data is audio data and video data.

S714: The mobile phone resumes sending of the audio data and the video data to the smart screen.

S715: The smart screen resumes playing of the video data and sends the audio data to the headset.

Correspondingly, the headset resumes playing of the audio data.

S707 to S715 are a process of control performed within the device set scope.

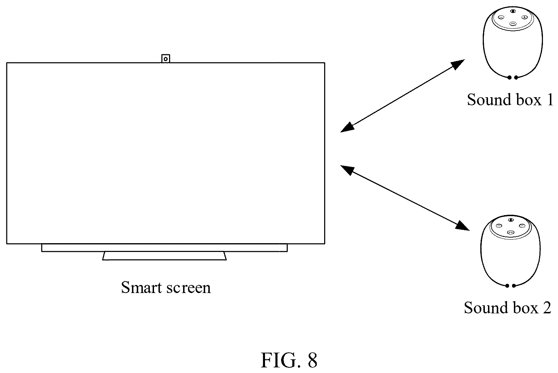

FIG. 8 is another diagram of an application scenario according to an embodiment of this application. As shown in FIG. 8, a smart screen may send audio data to a sound box 1 and a sound box 2. The smart screen may play video data, and the sound box 1 and the sound box 2 can separately form a left channel and a right channel, to provide better auditory experience for a user. In this scenario, the smart screen may be a cooperation device set user, and the sound box 1 and the sound box 2 may be cooperation device set members; or the smart screen may be a media player, and the sound box 1 and the sound box 2 may be media controllers; or the smart screen may be an audio player, and the sound box 1 and the sound box 2 may be audio controllers.

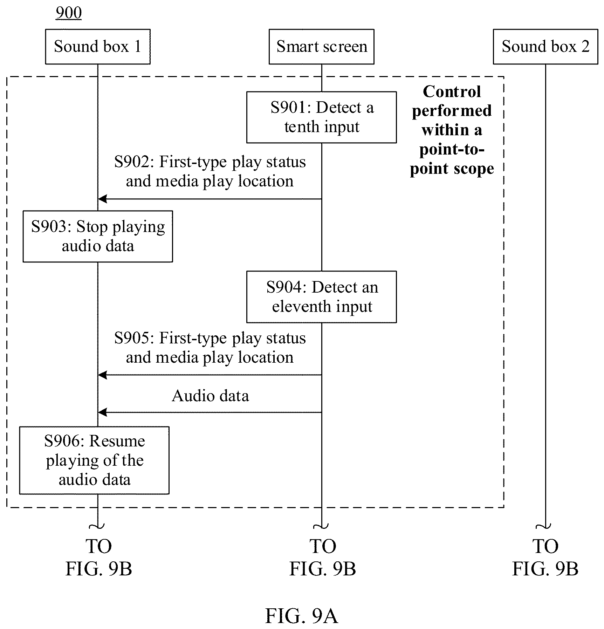

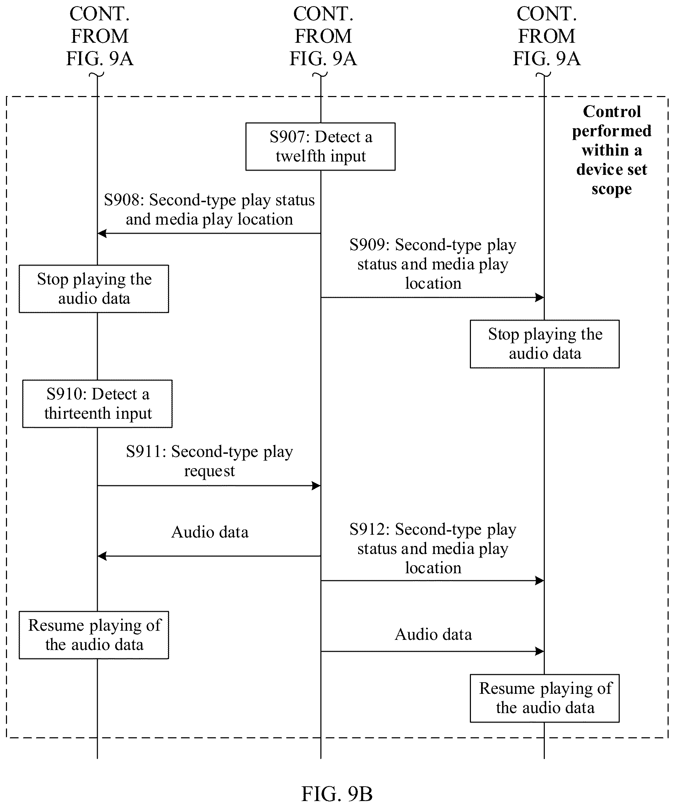

The scenario shown in FIG. 8 is used as an example. FIG. 9A and FIG. 9B are a schematic flowchart of a data transmission method 900 according to an embodiment of this application. As shown in FIG. 9A and FIG. 9B, the method 900 includes the following steps.

S901: The smart screen detects a tenth input for stopping playing audio data by the sound box 1.

For example, the tenth input may be a voice input, or the tenth input may be an input for a virtual button displayed on the smart screen, and the virtual button is a play/stop button for the sound box 1.

S902: The smart screen sends a first-type play status and a media play location to the sound box 1, where the first-type play status indicates to stop playing.

Optionally, the first-type play status implicitly indicates that an signaling scope of the first-type play status is a point-to-point scope.

After sending the first-type playing status to the sound box 1, the smart screen may stop sending audio data to the sound box 1. In this case, the smart screen may continue to send audio data to the sound box 2.

S903: When receiving the first-type play status and the media play location, the sound box 1 may stop playing the audio data.

S904: The smart screen detects an eleventh input for resuming playing of audio data by the sound box 1.

For example, the eleventh input may be a voice input, or the eleventh input may be an input for a virtual button displayed on the smart screen, and the virtual button is a play/stop button for the sound box 1.

S905: The smart screen sends a first-type play status and a media play location to the sound box 1, where the first-type play status indicates playing.

Optionally, the first-type play status implicitly indicates that an signaling scope of the first-type play status is a point-to-point scope.

After sending the first-type playing status and the media play location to the sound box 1, the smart screen may resume sending of the audio data to the sound box 1.

S906: When receiving the first-type play status and the media play location, the sound box 1 may resume playing of the audio data.

S901 to S906 are control performed within a point-to-point scope.

S907: The smart screen detects a twelfth input for stopping playing audio data by the sound box 1 and the sound box 2.

For example, the twelfth input may be a voice input, or the twelfth input may be an input for a virtual button displayed on the smart screen, and the virtual button is a play/stop button for the sound box and the sound box 2.

S908: The smart screen sends a second-type play status and a media play location to the sound box 1, where the second-type play status indicates to stop playing.

Optionally, the second-type play status implicitly indicates that an signaling scope of the second-type play status is devices in a device set.

Optionally, the second-type play status includes a field indicating audio data.

After sending the second-type playing status and the media play location to the sound box 1, the smart screen may stop sending the audio data to the sound box 1. Correspondingly, the sound box 1 stops playing the audio data.

S909: The smart screen sends a second-type play status and a media play location to the sound box 2, where the second-type play status indicates to stop playing.

Optionally, the second-type play status implicitly indicates that an signaling scope of the second-type play status is devices in the device set scope.

Optionally, the second-type play status includes a field indicating audio data.

After sending the second-type playing status and the media play location to the sound box 2, the smart screen may stop sending the audio data to the sound box 2. Correspondingly, the sound box 2 stops playing the audio data.

There is no actual sequence between S908 and S909.

S910: The sound box 1 detects a thirteenth input for resuming playing of audio data.

For example, the thirteenth input may be a voice input, or the thirteenth input may be an input of the user for a play/pause button.

S911: The sound box 1 sends a second-type play request to the smart screen.

Optionally, the sound box 1 may send the second-type play request to the smart screen based on semantics and the signaling scope of the second-type play status received in S908.

Optionally, the second-type play request implicitly indicates that an signaling scope of the second-type play request is devices in the device set scope.

Optionally, the second-type play request includes a field indicating audio data.

S912: The smart screen resume sending of audio data to the sound box 1 based on the second-type play request, and sends a second-type play status and a media play location to the sound box 2, where the second-type play status indicates playing.

Optionally, the second-type play status implicitly indicates that an signaling scope of the second-type play status is devices in the device set scope.

Optionally, the second-type play status includes a field indicating audio data.

Correspondingly, the smart screen resumes sending of the audio data to the sound box 2, and the sound box 2 may resume playing of the audio data.

S907 to S912 are a process of coordinated control performed within the device set scope.

The transmission method 900 is described by using an example in which the smart screen triggers playing/pausing of the sound box 1. Embodiments of this application are not limited thereto. For example, a process of the transmission method 900 is also applicable to volume control. For brevity, details are not described herein.

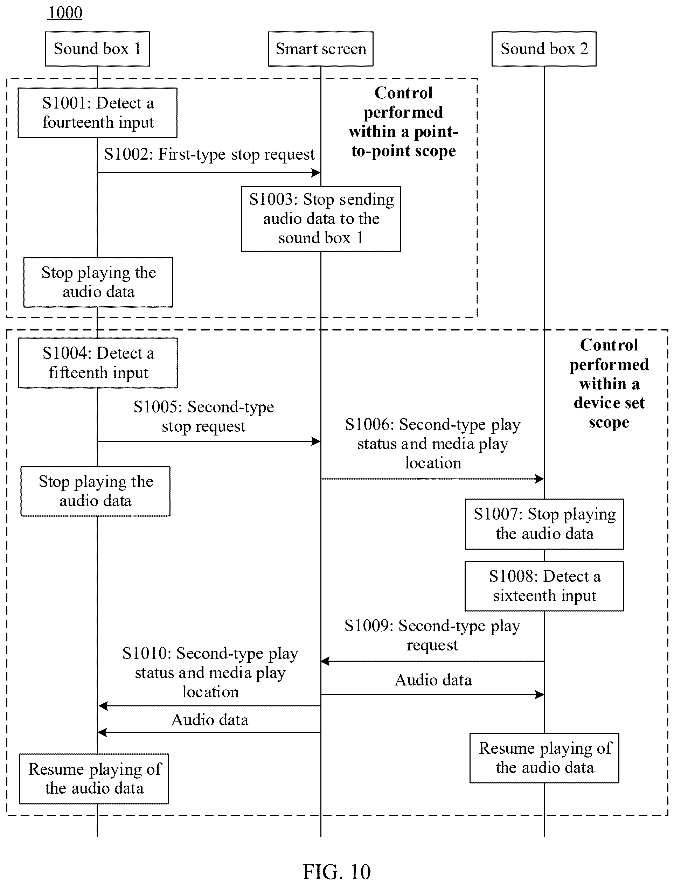

The scenario shown in FIG. 8 is still used as an example. FIG. 10 is a schematic flowchart of a data transmission method 1000 according to an embodiment of this application. As shown in FIG. 10, the method 1000 includes the following steps.

S1001: The sound box 1 detects a fourteenth input for stopping playing audio data by the sound box 1.

For example, the fourteenth input may be a voice input, or the fourteenth input may be an input for a play/pause button, on the sound box 1, that is tapped for two times.

S1002: The sound box 1 sends a first-type stop request to the smart screen.

Optionally, the first-type stop request implicitly indicates that an signaling scope of the first-type stop request is a point-to-point scope.

S1003: When receiving the first-type stop request, the smart screen may stop sending audio data to the sound box 1.

Correspondingly, the sound box 1 stops playing the audio data.

In this case, the smart screen may continue to send audio data to the sound box 2, and the sound box 2 keeps playing the audio data.

After S1003, the smart screen may detect an input of a user. The smart screen may send a first-type play status (that indicates playing) and a media play location to the sound box 1 based on semantics, the signaling scope, and a type of data of the media play control signaling received in S1002, and resume transmission of the audio data to the sound box 1. Alternatively, after detecting an input of the user, the sound box 1 may send a first-type play request to the smart screen. When receiving the first-type play request, the smart screen may resume transmission of the audio data to the sound box 1.

S1001 to S1003 are control performed within a point-to-point scope.

S1004: The sound box 1 detects a fifteenth input for stopping playing audio data by the sound box 1 and the sound box 2.

For example, the fifteenth input may be a voice input, or the fifteenth input may be an input for a play/pause button, on the sound box 1, that is tapped for one time.

S1005: The sound box 1 sends a second-type stop request to the smart screen.

Optionally, the second-type stop request implicitly indicates that an signaling scope of the second-type stop request is devices in a device set.

Optionally, the second-type stop request includes a field indicating audio data.

S1006: When receiving the second-type stop request, the smart screen may stop sending audio data to the sound box 1, and send a second-type play status and a media play location to the sound box 2 based on the second-type stop request, where the second-type play status indicates to stop playing.

Correspondingly, the sound box 1 stops playing the audio data.

After sending the second-type playing status and the media play location to the sound box 2, the smart screen may stop sending the audio data to the sound box 2.

Optionally, that the smart screen sends the second-type play status and the media play location to the sound box 2 based on the second-type stop request includes: The smart screen sends the second-type play status and the media play location to the sound box 2 based on semantics, an signaling scope, and a type of data of the second-type stop request.

S1007: When receiving the second-type play status and the media play location, the sound box 2 stops playing the audio data.

S1008: The sound box 2 detects a sixteenth input for resuming playing of audio data by the sound box 1 and the sound box 2.

For example, the sixteenth input may be a voice input, or the sixteenth input may be an input for a play/pause button, on the sound box 2, that is tapped for one time.

S1009: The sound box 2 sends a second-type play request to the smart screen.

Optionally, the sound box 2 may send the second-type play request to the smart screen based on semantics and an signaling scope of the second-type play status received in S1006.

Optionally, the second-type play request implicitly indicates that an signaling scope of the second-type play request is devices in the device set scope.

Optionally, the second-type play request includes a field indicating audio data.

S1010: The smart screen resume sending of audio data to the sound box 2 based on the second-type play request, and sends a second-type play status and a media play location to the sound box 1, where the second-type play status indicates playing.

Optionally, the second-type play status implicitly indicates that an signaling scope of the second-type play status is devices in the device set scope.

Optionally, the second-type play status includes a field indicating audio data.

Correspondingly, the smart screen resumes sending of audio data to the sound box 1, and the sound box 1 may resume playing of the audio data.

S1004 to S1010 are a process of coordinated control performed within the device set scope.

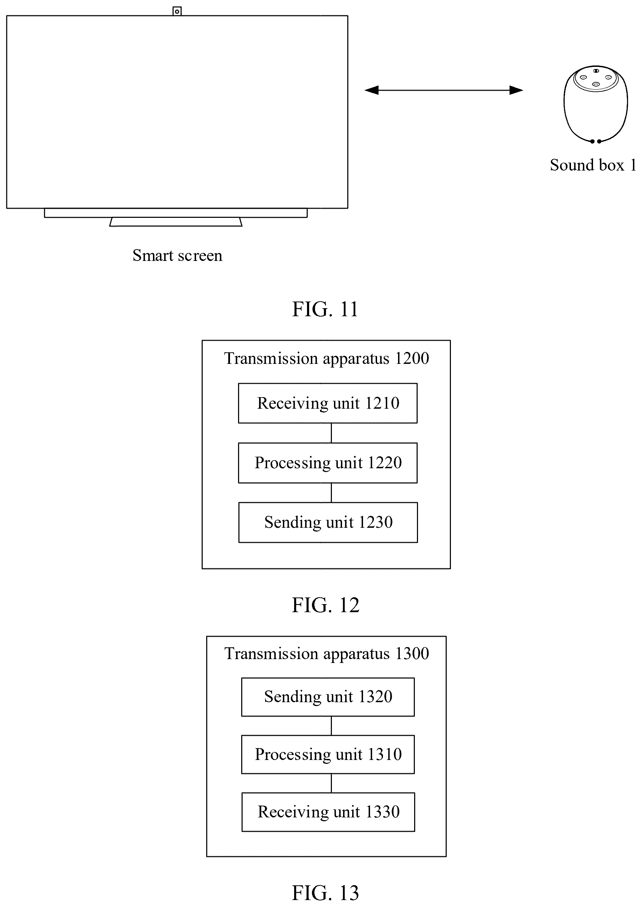

The device set scenario is described above with reference to the accompanying drawings. The following describes a point-to-point scenario with reference to an application scenario shown in FIG. 11.

FIG. 11 is another diagram of an application scenario according to an embodiment of this application. As shown in FIG. 11, a smart screen may send audio data to a sound box, so that the sound box can play the audio data, and the smart screen can play video data. In this case, the sound box may be a media controller, and the smart screen may be a media player.

An audio data control process is as follows:

When detecting a seventeenth input (for example, tapping a play/pause button for two times) for stopping playing audio data by the sound box, the sound box may send a first-type stop request to the smart screen. After receiving the first-type stop request, the smart screen may stop sending audio data to the sound box, and controls a speaker of the smart screen to play the audio data.

When detecting an eighteenth input for resuming playing of audio data by the sound box, the sound box may send a first-type play request to the smart screen. When receiving the first-type play request, the smart screen may resume sending of audio data to the sound box and control the speaker of the smart screen to stop playing the audio data, and the sound box may resume playing of the audio data.

A coordinated control process of audio data and video data is as follows:
When detecting a nineteenth input (for example, tapping a play/pause button for one time) for stopping playing audio data and video data, the sound box may send a second-type stop request to the smart screen. When receiving the second-type stop request, the smart screen may stop sending audio data to the sound box and stop playing video data, and the sound box stops playing the audio data.

When detecting a twentieth input for resuming playing of audio data and video data, the sound box may send a second-type play request to the smart screen. When receiving the second-type play request, the smart screen may resume sending of the audio data to the sound box and resume playing of the video data, and the sound box may resume playing of the audio data.

The foregoing embodiments are described by using a smart home scenario as an example. Embodiments of this application are not limited thereto. For example, embodiments of this application may be further applied to an in-vehicle scenario. For example, a user in a front passenger area may use a mobile phone to send audio data to a headrest sound box in the front passenger area and a headrest sound box in a second-row area, and send video data to a front passenger entertainment screen and a second-row entertainment screen. According to the foregoing technical solutions, coordinated control can be implemented between the headrest sound box and the entertainment screen, to help improve driving experience of the user.

FIG. 12 is a block diagram of a transmission apparatus 1200 according to an embodiment of this application. As shown in FIG. 12, the transmission apparatus 1200 includes: a receiving unit 1210, configured to receive first indication information and second indication information, where the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set includes the first device; and a processing unit 1220, configured to perform a first operation based on the first indication information and the second indication information.

Optionally, the receiving unit 1210 is configured to receive the first control signaling, and the first control signaling indicates the first signaling scope.

Optionally, the first control signaling is media play control signaling.

Optionally, the receiving unit 1210 is further configured to receive third indication information, where the third indication information indicates a type of data controlled by the first control signaling, and the type of the data includes audio data and/or video data. The processing unit 1220 is configured to perform the first operation based on the first indication information, the second indication information, and the third indication information.

Optionally, the receiving unit 1210 is configured to receive the first control signaling, where the first control signaling includes a first field, and the first field indicates the first signaling scope.

Optionally, the first control signaling is volume control signaling.

Optionally, the apparatus further includes a sending unit 1230, and the first signaling scope indicates that the first control signaling acts on the devices in the first device set. The receiving unit 1210 is configured to receive the first indication information and the second indication information from a second device. The sending unit 1230 is configured to send fourth indication information and fifth indication information to a third device based on the first indication information and the second indication information, where the fourth indication information indicates second control signaling, and the fifth indication information indicates a second signaling scope. The second control signaling is associated with the first control signaling, and the second signaling scope is associated with the first signaling scope.

Optionally, the apparatus 1200 further includes an obtaining unit and a sending unit 1230, and the first signaling scope indicates that the first control signaling acts on the devices in the first device set. The receiving unit 1210 is configured to receive the first indication information and the second indication information from a fourth device. The obtaining unit is configured to obtain an input of a user. The sending unit 1230 is configured to send sixth indication information and seventh indication information to the fourth device based on the input, where the sixth indication information indicates third control signaling, and the seventh indication information indicates a third signaling scope. The third control signaling is associated with the first control signaling, and the third signaling scope is associated with the first signaling scope.

FIG. 13 is a block diagram of a transmission apparatus 1300 according to an embodiment of this application. As shown in FIG. 13, the transmission apparatus 1300 includes: a processing unit 1310, configured to determine first indication information and second indication information, where the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set includes the first device; and a sending unit 1320, configured to send the first indication information and the second indication information.

Optionally, the sending unit 1320 is configured to send the first control signaling, and the first control signaling indicates the first signaling scope.

Optionally, the first control signaling is media play control signaling.

Optionally, the sending unit 1320 is further configured to send third indication information, where the third indication information indicates a type of data controlled by the first control signaling, and the type of the data includes audio data and/or video data.

Optionally, the sending unit 1320 is configured to send the first control signaling, where the first control signaling includes a first field, and the first field indicates the first signaling scope.

Optionally, the first control signaling is volume control signaling.

Optionally, the apparatus further includes a receiving unit 1330. The sending unit 1320 is configured to send the first indication information and the second indication information to a fourth device. The receiving unit 1330 is configured to receive sixth indication information and seventh indication information from the fourth device, where the sixth indication information indicates third control signaling, and the seventh indication information indicates a third signaling scope. The third control signaling is associated with the first control signaling, and the third signaling scope is associated with the first signaling scope.

It should be understood that division into the units in the foregoing apparatus is merely division into logical functions. In practice, all or some of the units may be integrated into one physical entity, or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the unit in the apparatus may be implemented in a form of hardware circuit, and the functions of a part or all of the units may be implemented by using a design of the hardware circuit. The hardware circuit may be understood as one or more processors. For example, in an implementation, the hardware circuit is an application-specific integrated circuit (application-specific integrated circuit, ASIC), and functions of a part or all of the units are implemented by using a design of a logical relationship between elements in the circuit. For another example, in another implementation, the hardware circuit may be implemented by using a programmable logic device (programmable logic device, PLD). A field programmable gate array (field programmable gate array, FPGA) is used as an example. The field programmable gate array may include a large quantity of logic gate circuits, and a connection relationship between the logic gate circuits is configured by using a configuration file, to implement the functions of the part or all of the foregoing units. All the units of the apparatus may be implemented in a form of software called by the processor, or may be implemented in a form of hardware circuit, or some of the units are implemented in a form of software called by the processor, and remaining units are implemented in a form of hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated, or may be implemented independently. In an implementation, these units are integrated together, and implemented in a form of a system-on-a-chip (system-on-a-chip, SoC). The SoC may include at least one processor, configured to implement any one of the foregoing methods or implement the functions of the units of the apparatus. Types of the at least one processor may be different. For example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions, and the processing unit executes the instructions stored in the storage unit, so that the apparatus performs the method or the steps performed in the foregoing embodiments.

The storage unit may be a memory, and the processing unit may be a processor.

An embodiment of this application further provides a terminal. The terminal may include the foregoing apparatus.

An embodiment of this application further provides a computer program product. The computer program product includes computer program code, and when the computer program code is run on a computer, the computer is enabled to perform the foregoing method.

An embodiment of this application further provides a computer-readable medium. The computer-readable medium stores program code, and when the computer program code is run on a computer, the computer is enabled to perform the foregoing method.

In an implementation process, steps in the methods can be completed by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each specific application. However, it should not be considered that the implementation goes beyond the scope of this application.

A person skilled in the art may clearly understand that, for the purpose of convenient and brief description, for detailed working processes of the foregoing system, apparatus, and unit, refer to corresponding processes in the method embodiments. Details are not described herein again.

In the several embodiments provided in this application, it should be understood that the disclosed system, apparatus, and method may be implemented in another manner. For example, the described apparatus embodiments are merely examples. For example, division into the units is merely division into logical functions and may be other division during actual implementation. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electronic form, a mechanical form, or another form.

Units described as separate parts may or may not be physically separate, and parts displayed as units may or may not be physical units, may be located in one position, or may be distributed on a plurality of network units. Some or all of the units may be selected based on actual requirements to achieve objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, or a network device) to perform all or some of the steps of the methods described in embodiments. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A transmission method, comprising:
receiving first indication information and second indication information, wherein the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set comprises the first device; and
performing a first operation based on the first indication information and the second indication information.

2. The method according to claim 1, wherein the receiving the first indication information and the second indication information comprises:
receiving the first control signaling, wherein the first control signaling indicates the first signaling scope.

3. The method according to claim 2, wherein the first control signaling is media play control signaling.

4. The method according to claim 2 or 3, wherein the method further comprises:
receiving third indication information, wherein the third indication information indicates a type of data controlled by the first control signaling, and the type of the data comprises audio data and/or video data; and
the performing the first operation based on the first indication information and the second indication information comprises:
performing the first operation based on the first indication information, the second indication information, and the third indication information.

5. The method according to claim 1, wherein the receiving the first indication information and the second indication information comprises:
receiving the first control signaling, wherein the first control signaling comprises a first field, and the first field indicates the first signaling scope.

6. The method according to claim 5, wherein the first control signaling is volume control signaling.

7. The method according to any one of claims 1 to 6, wherein the first signaling scope indicates that the first control signaling acts on the devices in the first device set, and the receiving the first indication information and the second indication information comprises:
receiving the first indication information and the second indication information from a second device; and
the performing the first operation based on the first indication information and the second indication information comprises:
sending fourth indication information and fifth indication information to a third device based on the first indication information and the second indication information, wherein the fourth indication information indicates second control signaling, and the fifth indication information indicates a second signaling scope, wherein
the second control signaling is associated with the first control signaling, and the second signaling scope is associated with the first signaling scope.

8. The method according to any one of claims 1 to 6, wherein the first signaling scope indicates that the first control signaling acts on the devices in the first device set, and the receiving the first indication information and the second indication information comprises:
receiving the first indication information and the second indication information from a fourth device; and
the method further comprises:
obtaining an input of a user; and
sending sixth indication information and seventh indication information to the fourth device based on the input, wherein the sixth indication information indicates third control signaling, and the seventh indication information indicates a third signaling scope, wherein
the third control signaling is associated with the first control signaling, and the third signaling scope is associated with the first signaling scope.

9. A transmission method, comprising:
sending first indication information and second indication information, wherein the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set comprises the first device.

10. The method according to claim 9, wherein the sending the first indication information and the second indication information comprises:
sending the first control signaling, wherein the first control signaling indicates the first signaling scope.

11. The method according to claim 10, wherein the first control signaling is media play control signaling.

12. The method according to claim 10 or 11, wherein the method further comprises:
sending third indication information, wherein the third indication information indicates a type of data controlled by the first control signaling, and the type of the data comprises audio data and/or video data.

13. The method according to claim 9, wherein the sending the first indication information and the second indication information comprises:
sending the first control signaling, wherein the first control signaling comprises a first field, and the first field indicates the first signaling scope.

14. The method according to claim 13, wherein the first control signaling is volume control signaling.

15. The method according to any one of claims 9 to 14, wherein the sending the first indication information and the second indication information comprises:
sending the first indication information and the second indication information to a fourth device; and
the method further comprises:
receiving sixth indication information and seventh indication information from the fourth device, wherein the sixth indication information indicates third control signaling, and the seventh indication information indicates a third signaling scope, wherein
the third control signaling is associated with the first control signaling, and the third signaling scope is associated with the first signaling scope.

16. A transmission apparatus, comprising:
a receiving unit, configured to receive first indication information and second indication information, wherein the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set comprises the first device; and
a processing unit, configured to perform a first operation based on the first indication information and the second indication information.

17. The apparatus according to claim 16, wherein the receiving unit is configured to receive the first control signaling, and the first control signaling indicates the first signaling scope.

18. The apparatus according to claim 17, wherein the first control signaling is media play control signaling.

19. The apparatus according to claim 17 or 18, wherein the receiving unit is further configured to:
receive third indication information, wherein the third indication information indicates a type of data controlled by the first control signaling, and the type of the data comprises audio data and/or video data; and
the processing unit is configured to:
perform the first operation based on the first indication information, the second indication information, and the third indication information.

20. The apparatus according to claim 16, wherein the receiving unit is configured to:
receive the first control signaling, wherein the first control signaling comprises a first field, and the first field indicates the first signaling scope.

21. The apparatus according to claim 20, wherein the first control signaling is volume control signaling.

22. The apparatus according to any one of claims 16 to 21, wherein the apparatus further comprises a sending unit, and the first signaling scope indicates that the first control signaling acts on the devices in the first device set;
the receiving unit is configured to receive the first indication information and the second indication information from a second device; and
the sending unit is configured to send fourth indication information and fifth indication information to a third device based on the first indication information and the second indication information, wherein the fourth indication information indicates second control signaling, and the fifth indication information indicates a second signaling scope, wherein
the second control signaling is associated with the first control signaling, and the second signaling scope is associated with the first signaling scope.

23. The apparatus according to any one of claims 16 to 21, wherein the apparatus further comprises an obtaining unit and a sending unit, and the first signaling scope indicates that the first control signaling acts on the devices in the first device set;
the receiving unit is configured to receive the first indication information and the second indication information from a fourth device;
the obtaining unit is configured to obtain an input of a user; and
the sending unit is configured to send sixth indication information and seventh indication information to the fourth device based on the input, wherein the sixth indication information indicates third control signaling, and the seventh indication information indicates a third signaling scope, wherein
the third control signaling is associated with the first control signaling, and the third signaling scope is associated with the first signaling scope.

24. A transmission apparatus, comprising:
a processing unit, configured to determine first indication information and second indication information, wherein the first indication information indicates first control signaling, the second indication information indicates a first signaling scope of the first control signaling, and the first signaling scope indicates that the first control signaling acts on a first device; or the first signaling scope indicates that the first control signaling acts on devices in a first device set, and the first device set comprises the first device; and
a sending unit, configured to send the first indication information and the second indication information.

25. The apparatus according to claim 24, wherein
the sending unit is configured to send the first control signaling, wherein the first control signaling indicates the first signaling scope.

26. The apparatus according to claim 25, wherein the first control signaling is media play control signaling.

27. The apparatus according to claim 25 or 26, wherein the sending unit is further configured to:
send third indication information, wherein the third indication information indicates a type of data controlled by the first control signaling, and the type of the data comprises audio data and/or video data.

28. The apparatus according to claim 24, wherein the sending unit is configured to:
send the first control signaling, wherein the first control signaling comprises a first field, and the first field indicates the first signaling scope.

29. The apparatus according to claim 28, wherein the first control signaling is volume control signaling.

30. The apparatus according to any one of claims 24 to 29, wherein the apparatus further comprises a receiving unit;
the sending unit is configured to send the first indication information and the second indication information to a fourth device; and
the receiving unit is configured to receive sixth indication information and seventh indication information from the fourth device, wherein the sixth indication information indicates third control signaling, and the seventh indication information indicates a third signaling scope, wherein
the third control signaling is associated with the first control signaling, and the third signaling scope is associated with the first signaling scope.

31. A transmission apparatus, wherein the transmission apparatus comprises a processor and a memory, the memory is configured to store program instructions, and the processor is configured to invoke the program instructions to perform the method according to any one of claims 1 to 8.

32. A transmission apparatus, wherein the transmission apparatus comprises a processor and a memory, the memory is configured to store program instructions, and the processor is configured to invoke the program instructions to perform the method according to any one of claims 9 to 15.

33. A terminal, wherein the terminal comprises the apparatus according to any one of claims 16 to 32.

34. A computer-readable storage medium, wherein the computer-readable medium stores program code, and when the program code is run on a computer, the computer is enabled to perform the method according to any one of claims 1 to 15.
